# FASCICULE DE BREVET EUROPEEN

(11) **EP 3 081 390 B1**
(45) Date de publication et mention de la délivrance du brevet: **04.09.2019**
(21) Numéro de dépôt: 16164311.9
(22) Date de dépôt: 07.04.2016
(51) Int. Cl.: B60B 27/00, F16D 11/14, F16D 1/076, F16D 11/00

(54) **SYSTÈME D'ENTRAÎNEMENT EN ROTATION D'UNE ROUE DE VÉHICULE AUTOMOBILE**
DREHANTRIEBSSYSTEM EINES KRAFTFAHRZEUGRADS
ROTARY DRIVE SYSTEM OF A MOTOR VEHICLE WHEEL

(30) Priorité: 10.04.2015 FR 1553148
(43) Date de publication de la demande: 19.10.2016
(73) Titulaire: NTN-SNR Roulements, 74010 Annecy (FR)
(72) Inventeur: EHINGER, Pierre, 74210 Faverges (FR); CHAMPIN, Cédric, 74570 Groisy (FR)
(74) Mandataire: Sayettat, Julien Christian

(56) Documents cités:
- EP-A1- 2 634 012
- EP-A2- 2 141 374
- JP-A- 2009 083 814
- US-A1- 2010 038 958

## Description

L'invention concerne un système d'entraînement en rotation d'une roue de véhicule automobile comprenant un palier à roulement et un bol de transmission d'un couple moteur de rotation, ainsi qu'un palier à roulement et un revêtement pour un tel système.

Le palier présente un organe tournant monté en rotation par rapport à un organe fixe par l'intermédiaire d'au moins une rangée de corps roulants, l'organe tournant comprenant des moyens d'association de la roue et l'organe fixe comprenant des moyens d'association à la structure du véhicule.

Un tel palier permet le montage en rotation d'une roue de véhicule automobile qui, lorsqu'elle est motrice, peut être entraînée en rotation par un bol de transmission qui est actionné en rotation par le moteur du véhicule, ledit bol comprenant notamment un joint homocinétique (CVJ) par exemple de type Rzeppa.

Pour assurer la transmission du couple de rotation entre le bol et l'organe tournant, il est connu d'utiliser une structure d'engrenage qui présente des moyens géométriques solidaires respectivement dudit bol et dudit organe tournant, lesdits moyens géométriques étant agencés pour s'imbriquer sur une course axiale pour assurer la transmission du couple moteur dudit bol audit organe tournant.

En particulier, les documents US-8 025 578 et EP 2141374 décrivent des moyens géométriques comprenant des dentures réparties angulairement en étant séparées par des rainures, lesdites dentures étant réalisées respectivement sur une portée radiale arrière de l'organe tournant et sur une portée radiale avant du bol de transmission.

Par ailleurs, il est nécessaire d'assurer l'étanchéité au niveau de tels moyens géométriques, notamment au niveau de leur interface, afin de les protéger de la corrosion, d'augmenter leur durée de vie et de faciliter leur montage/démontage.

Pour ce faire, il est connu de disposer un joint d'étanchéité autour des moyens géométriques de l'un parmi l'organe tournant et le bol de transmission, notamment par surmoulage, l'autre parmi ledit bol et ledit organe tournant étant pourvu d'une gorge qui s'étend autour des moyens géométriques et dans laquelle une lèvre dudit joint est disposée pour assurer l'étanchéité au niveau de l'interface entre lesdits moyens géométriques.

Une telle réalisation présente toutefois de nombreux inconvénients, notamment en ce qu'elle nécessite la formation d'une gorge pour garantir l'étanchéité, ce qui génère des coûts non négligeables.

Par ailleurs, le montage du joint d'étanchéité s'avère relativement complexe à mettre en oeuvre, en ce qu'il nécessite des opérations peu habituelles et risquées, notamment vis-à-vis de la fiabilité de l'étanchéité. En effet, en cas de problème de montage, la lèvre du joint d'étanchéité peut se décrocher de la gorge, de sorte que ledit joint ne peut assurer correctement l'étanchéité.

De plus, le joint d'étanchéité présente un certain encombrement qui pose problème pour sa prise en charge au montage et pour son conditionnement, et ne peut être utilisé qu'avec une catégorie de paliers à roulement donnée dont l'organe tournant présente une collerette de sertissage de diamètre adapté.

L'invention a pour but de résoudre les problèmes de l'art antérieur en proposant notamment un système d'entraînement en rotation d'une roue de véhicule automobile dans lequel l'étanchéité au niveau de l'interface entre les moyens d'engrenage du palier à roulement et du bol de transmission est assurée de façon fiable, simple et peu coûteuse.

A cet effet, selon un premier aspect, l'invention propose un système d'entraînement en rotation d'une roue de véhicule automobile, ledit système comprenant un palier à roulement présentant un organe tournant monté en rotation par rapport à un organe fixe par l'intermédiaire d'au moins une rangée de corps roulants, ledit organe tournant comprenant des moyens d'association de la roue et ledit système comprenant un bol de transmission d'un couple moteur audit organe tournant, ledit système comprenant en outre une structure d'engrenage qui présente des moyens géométriques solidaires respectivement de l'organe tournant et du bol de transmission, lesdits moyens géométriques étant agencés pour s'imbriquer sur une course axiale pour assurer la transmission dudit couple moteur, ledit système comprenant un revêtement qui est interposé entre les moyens géométriques, ledit revêtement étant agencé pour, sur la course axiale d'imbrication, s'incruster à l'interface desdits moyens géométriques afin d'assurer l'étanchéité au niveau de ladite interface.

Selon un deuxième aspect, l'invention propose un palier à roulement pour un tel système d'entraînement, dans lequel le revêtement est disposé sur les moyens géométriques solidaires de l'organe tournant.

Selon un troisième aspect, l'invention propose un revêtement pour un tel système d'entraînement, ledit revêtement étant agencé pour être interposé entre les moyens géométrique pour, sur la course axiale d'imbrication, s'incruster à l'interface desdits moyens géométriques afin d'assurer l'étanchéité au niveau de ladite interface.

D'autres objets et avantages de l'invention apparaîtront dans la description qui suit, faite en référence aux figures annexées, dans lesquelles :

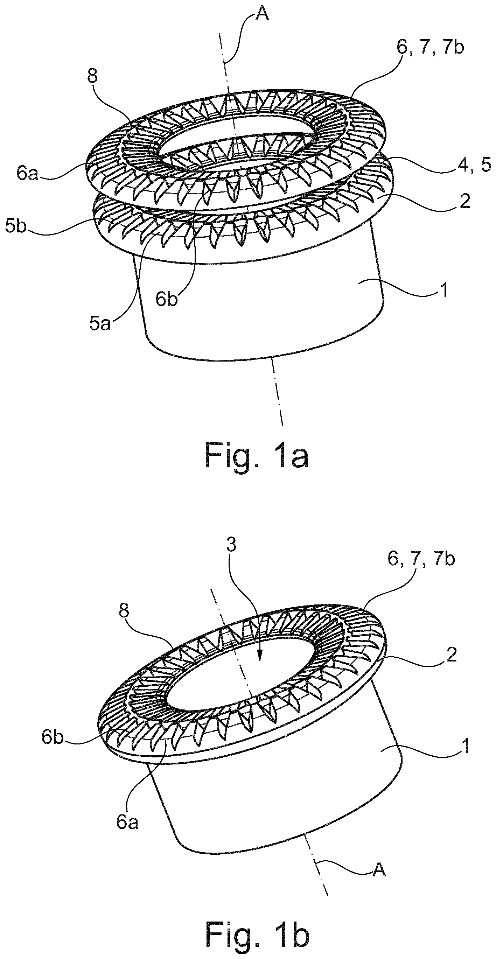

- les figures 1 sont des vues partielles en perspective éclatée (figure 1a) et assemblée (figure 1b) d'un revêtement sur les moyens géométriques d'un organe tournant d'un système d'entraînement en rotation selon l'invention ;
- la figure 2 est une vue de dessus de l'organe tournant des figures 1 ;
- la figure 3 est une vue partielle en coupe longitudinale de l'organe tournants des figures 1 et 2.

En relation avec ces figures, on décrit ci-dessous un système d'entraînement en rotation d'une roue de véhicule automobile comprenant un palier à roulement permettant le montage en rotation de ladite roue.

Pour ce faire, le palier présente un organe tournant 1 monté en rotation par rapport à un organe fixe par l'intermédiaire d'au moins une rangée de corps roulants. En particulier, l'organe tournant 1, par exemple réalisé en acier, présente une collerette 2 qui peut être réalisée par sertissage, par exemple pour assurer l'immobilisation axiale sur ledit organe tournant d'une bague rapportée sur laquelle est formée une piste de roulement pour les corps roulants, ainsi qu'un alésage 3 qui débouche dans la collerette 2.

Par ailleurs, l'organe tournant 1 comprend des moyens d'association de la roue (non représentés), par exemple sous la forme d'une bride sur laquelle sont formés des trous de fixation de la roue par vissage. De même, l'organe fixe comprend des moyens d'association à la structure du véhicule, par exemple des moyens d'association à un élément de suspension dudit véhicule, lesdits moyens pouvant comprendre une bride sur laquelle sont formés des trous de fixation par vissage.

Dans le cas du montage d'une roue motrice, l'entraînement en rotation de ladite roue peut être réalisé par un bol de transmission d'un couple moteur à l'organe tournant 1, ledit bol étant actionné en rotation par le moteur du véhicule et comprenant notamment un joint homocinétique (CVJ) par exemple de type Rzeppa.

Pour assurer la transmission du couple moteur entre le bol et l'organe tournant 1, le système d'entraînement comprend une structure d'engrenage qui présente des premiers moyens géométriques 5 solidaires de l'organe tournant 1 et des deuxièmes moyens géométriques solidaires du bol de transmission, lesdits moyens géométriques étant agencés pour s'imbriquer sur une course axiale. Les moyens géométriques 5 peuvent être réalisés par usinage ou par forgeage à chaud, à froid ou à température intermédiaire.

Selon une réalisation, l'organe tournant 1 et le bol de transmission sont équipés de moyens géométriques d'engrenage 5 de géométrie analogue, l'imbrication desdits moyens étant réalisée par décalage angulaire relatif.

En particulier, le bol de transmission et l'organe tournant 1 présentent une portée frontale respectivement avant et arrière 4 sur lesquelles les moyens géométriques 5 sont formés, chaque portée frontale 4 présentant une géométrie annulaire sur laquelle les moyens géométriques 5 sont répartis angulairement de façon concentrique.

Par ailleurs, les moyens géométriques 5 s'étendent radialement par rapport à l'axe de rotation A de l'organe tournant 1 et du bol de transmission. En relation avec les figures, la portée frontale arrière 4 de l'organe tournant 1 est formée sur la collerette 2.

Les moyens géométriques 5 présentent chacun une alternance angulaire de motifs mâles 5a et femelles 5b, les motifs mâles 5a étant agencés pour s'imbriquer axialement dans les motifs femelles 5b sur une course axiale agencée pour assurer entre lesdits motifs mâles et femelles une interférence circonférentielle qui est suffisante pour la transmission du couple moteur.

En particulier, la course axiale est formée depuis la mise en contact des motifs mâles 5a jusqu'à la mise en position d'engrenage des moyens géométriques 5, dans laquelle les motifs mâles 5a sont immobilisés en rotation dans les motifs femelles 5b, la profondeur des motifs femelles 5b et la répartition des motifs mâles 5a permettant la solidarisation en rotation du bol de transmission et de l'organe tournant 1 de façon suffisamment fiable pour transmettre le couple moteur.

Le système d'entraînement comprend en outre un revêtement 6 qui est interposé entre les moyens géométriques 5 et qui est agencé pour, sur la course axiale d'imbrication, s'incruster à l'interface desdits moyens géométriques afin d'assurer l'étanchéité au niveau de ladite interface.

En particulier, le revêtement 6 présente un plateau 7 dont au moins une face 7a, 7b présente une géométrie complémentaire à celles des moyens géométriques 5 de la structure d'engrenage en regard desquels ladite face est disposée.

En relation avec les figures, le plateau 7 présente une face inférieure 7a qui est disposée contre les premiers moyens géométriques 5 solidaires de l'organe tournant 1 en épousant chacun des motifs femelles 5b et mâles 5a.

Par ailleurs, le plateau 7 présente une face supérieure 7b qui présente une géométrie analogue à celle des premiers moyens géométriques 5 contre lesquelles la face inférieure 7a est disposée, et donc une géométrie complémentaire à celle des deuxièmes moyens géométriques solidaires du bol de transmission. En particulier, la face supérieure 7b présente des motifs mâles 6a et femelles 6b qui s'étendent respectivement par-dessus les motifs mâles 5a et femelles 5b des premiers moyens géométriques 5.

Ainsi, sur la course axiale d'imbrication, le revêtement 6 s'incruste entre les premiers 5 et deuxièmes moyens géométriques par imbrication axiale entre la face supérieure 7b et les deuxièmes moyens géométriques.

Le revêtement 6 peut être formé séparément en tant que pièce de rechange, par exemple par moulage ou trempage, en présentant une géométrie permettant son interposition entre les moyens géométriques 5.

Pour former le revêtement 6, on peut également prévoir le dépôt d'un produit sur des moyens géométriques d'au moins un parmi l'organe tournant 1 et le bol de transmission, notamment sur les premiers moyens géométriques 5 solidaires dudit organe tournant, ledit dépôt étant réalisé par trempage desdits moyens géométriques dans un bain de produit.

En particulier, le produit peut être à base de Téflon, et présente une viscosité comprise entre 6000m Pa et 10000 mPa.

Ainsi, on peut obtenir facilement et de manière fiable un revêtement 6 qui épouse parfaitement les parois des motifs mâles 5a et femelles 5b des premiers moyens géométriques 5 et qui présente une face supérieure libre 7b dont la géométrie est analogue à celle desdits premiers moyens géométriques et complémentaire à celle des deuxièmes moyens géométriques.

Le revêtement 6 présente en outre un bourrelet d'étanchéité 8 qui s'étend transversalement dans chacun des motifs femelles 6b de la face supérieure 7b, et notamment à l'intérieur de la paroi de chaque motif femelle 5b que le revêtement 6 épouse, les motifs mâles des deuxièmes moyens géométriques étant agencés pour venir en contact sur ledit bourrelet en début de course axiale afin de déformer ledit bourrelet à l'interface des motifs mâles 5a et femelles 5b sur ladite course axiale et assurer l'étanchéité au niveau de ladite interface.

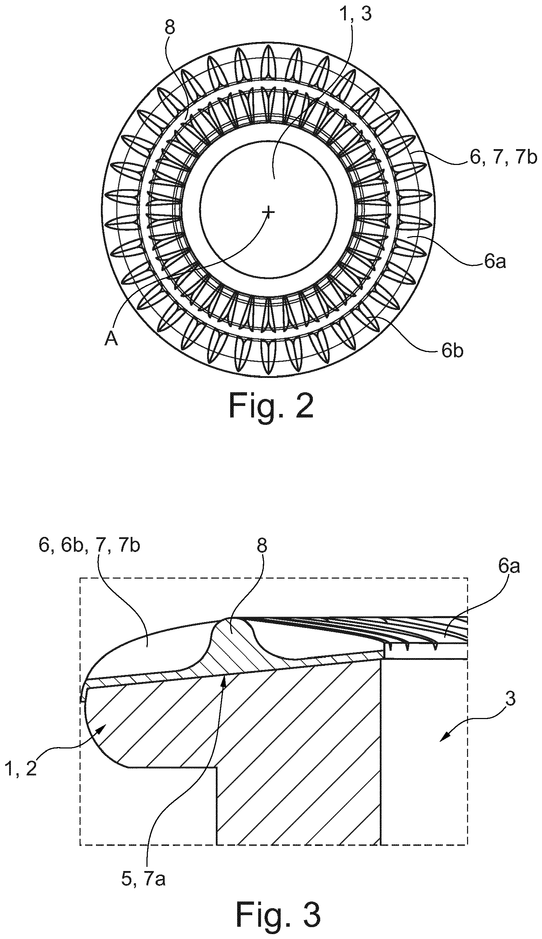

En relation avec les figures, et plus particulièrement la figure 2, le bourrelet d'étanchéité 8 s'étend circonférentiellement sur le revêtement 6. Ainsi, sur la course axiale d'imbrication, le bourrelet d'étanchéité 8 se déforme de manière continue, de sorte à assurer une étanchéité en un même point au niveau de chaque interface d'un couple de motifs mâle 5a et femelle 5b. En particulier, le bourrelet d'étanchéité 8 s'étend transversalement au niveau de la moitié de la longueur de chaque motif femelle 5b.

Par ailleurs, notamment en relation avec la figure 3, le bourrelet d'étanchéité 8 présente une hauteur qui est supérieure ou égale à la profondeur des motifs femelles 5b. En outre, le bourrelet 8 s'étend circonférentiellement en traversant à la fois les motifs mâles 5a, 6a et femelles 5b, 6b. Ainsi, en début de course axiale, le sommet des motifs mâles des deuxièmes moyens d'engrenage vient en contact sur le bourrelet 8 afin de déformer ledit bourrelet à l'interface des motifs mâles 5a et femelles 5b sur ladite course axiale et assurer l'étanchéité au niveau de ladite interface.

De façon avantageuse, lorsque le revêtement 6 est formé par trempage de moyens géométriques 5 dans un bain de produit, le bourrelet d'étanchéité 8 peut être formé par gravité en maintenant lesdits moyens géométriques tournés vers le bas après ledit trempage.

## Revendications

1. Système d'entraînement en rotation d'une roue de véhicule automobile, ledit système comprenant un palier à roulement présentant un organe tournant (1) monté en rotation par rapport à un organe fixe par l'intermédiaire d'au moins une rangée de corps roulants, ledit organe tournant comprenant des moyens d'association de la roue et ledit système comprenant un bol de transmission d'un couple moteur audit organe tournant, ledit système comprenant en outre une structure d'engrenage qui présente des moyens géométriques (5) solidaires respectivement de l'organe tournant (1) et du bol de transmission, lesdits moyens géométriques étant agencés pour s'imbriquer sur une course axiale pour assurer la transmission dudit couple moteur, ledit système étant **caractérisé en ce qu'**il comprend un revêtement (6) qui est interposé entre les moyens géométriques (5) respectivement de l'organe tournant et du bol de transmission, ledit revêtement étant agencé pour, sur la course axiale d'imbrication, s'incruster à l'interface entre les moyens géométriques de l'organe tournant et du bol de transmission afin d'assurer l'étanchéité au niveau de ladite interface.

2. Système d'entraînement selon la revendication 1, **caractérisé en ce que** l'organe tournant (1) et le bol de transmission sont équipés de moyens géométriques (5) d'engrenage de géométrie analogue, l'imbrication desdits moyens étant réalisée par décalage angulaire relatif.

3. Système d'entraînement selon l'une des revendications 1 ou 2, **caractérisé en ce que** le bol de transmission et l'organe tournant (1) présentent une portée frontale respectivement avant et arrière (4) sur lesquelles les moyens géométriques (5) sont formés.

4. Système d'entraînement selon la revendication 3, **caractérisé en ce que** les portées frontales (4) présentent chacune une géométrie annulaire, les moyens géométriques (5) étant répartis angulairement de façon concentrique sur lesdites géométries annulaires.

5. Système d'entraînement selon l'un des revendications 3 ou 4, **caractérisé en ce que** les moyens géométriques (5) s'étendent radialement par rapport à l'axe (A) de rotation de l'organe tournant (1) et du bol de transmission.

6. Système d'entraînement selon l'une quelconque des revendications 2 à 5, **caractérisé en ce que** les moyens géométriques (5) présentent chacun une alternance angulaire de motifs mâles (5a) et femelles (5b), les motifs mâles (5a) étant agencés pour s'imbriquer axialement dans les motifs femelles (5b) sur une course axiale agencée pour assurer entre lesdits motifs mâles et femelles une interférence circonférentielle qui est suffisante pour la transmission du couple moteur.

7. Système d'entraînement selon la revendication 6, **caractérisé en ce que** le revêtement (6) présente un bourrelet d'étanchéité (8) qui s'étend transversalement dans chacun des motifs femelles (5b), les motifs mâles (5a) étant agencés pour venir en contact sur ledit bourrelet en début de course axiale afin de déformer ledit bourrelet à l'interface des motifs mâles (5a) et femelles (5b) sur ladite course axiale et assurer l'étanchéité au niveau de ladite interface.

8. Système d'entraînement selon la revendication 7, **caractérisé en ce que** le bourrelet d'étanchéité (8) présente une hauteur qui est supérieure ou égale à la profondeur des motifs femelles (5b).

9. Système d'entraînement selon l'une des revendications 7 ou 8, **caractérisé en ce que** le bourrelet d'étanchéité (8) s'étend circonférentiellement sur le revêtement (6).

10. Système d'entraînement selon l'une quelconque des revendications 7 à 9, **caractérisé en ce que** le revêtement (6) épouse une paroi de chacun des motifs femelles (5b) à l'intérieur de laquelle s'étend le bourrelet d'étanchéité (8).

11. Système d'entraînement selon l'une quelconque des revendications 1 à 10, **caractérisé en ce que** le revêtement (6) est formé par dépôt d'un produit sur des moyens géométriques (5) d'au moins un parmi l'organe tournant (1) et le bol de transmission.

12. Système d'entraînement selon la revendication 11, **caractérisé en ce que** le revêtement (6) est formé par trempage des moyens géométriques (5) dans un bain du produit.

13. Système d'entraînement selon la revendication 12 lorsqu'elle dépend de la revendication 7, **caractérisé en ce que** le bourrelet d'étanchéité (8) est formée par gravité en maintenant les moyens géométriques (5) tournés vers le bas après le trempage.

14. Système d'entraînement selon l'une quelconque des revendications 11 à 13, **caractérisé en ce que** le produit présente une viscosité comprise entre 6000 mPa et 10000 mPa.

15. Palier à roulement pour un système d'entraînement selon l'une quelconque des revendications 1 à 14, dans lequel le revêtement (6) est disposé sur les moyens géométriques (5) solidaires de l'organe tournant (1).

16. Revêtement (6) pour un système d'entraînement selon l'une quelconque des revendications 1 à 10, ledit revêtement étant agencé pour être interposé entre les moyens géométrique pour, sur la course axiale d'imbrication, s'incruster à l'interface desdits moyens géométriques afin d'assurer l'étanchéité au niveau de ladite interface.

17. Revêtement (6) selon la revendication 16, **caractérisé en ce qu'**il présente un plateau (7) dont au moins une face (7a, 7b) présente une géométrie complémentaire à celle des moyens géométriques (5) de la structure d'engrenage en regard desquels ladite face est destinée à être disposée.

## Patentansprüche

1. System zum drehenden Antreiben eines Kraftfahrzeugrades, wobei das System ein Wälzlager umfasst, das ein drehendes Glied (1) aufweist, welches in Bezug auf ein feststehendes Glied mittels mindestens einer Reihe von Wälzkörpern drehend montiert ist, wobei das drehende Glied Mittel zum Verbinden mit dem Rad umfasst, und das System eine Schale zum Übertragen eines Motordrehmoments auf das drehende Glied umfasst, wobei das System weiter eine Verzahnungsstruktur umfasst, die geometrische Mittel (5) aufweist, welche jeweils fest mit dem drehenden Glied (1) und der Übertragungsschale verbunden sind, wobei die geometrischen Mittel dafür eingerichtet sind, auf einem axialen Weg ineinanderzugreifen, um die Übertragung des Motordrehmoments sicherzustellen, wobei das System **dadurch gekennzeichnet ist, dass** es eine Beschichtung (6) umfasst, die zwischen den geometrischen Mitteln (5) jeweils des drehenden Glieds und der Übertragungsschale eingefügt ist, wobei die Beschichtung dafür eingerichtet ist, sich auf dem axialen Eingriffsweg an der Grenzfläche zwischen den geometrischen Mitteln des drehenden Glieds und der Übertragungsschale zu verkrusten, um die Dichtigkeit im Bereich der Grenzfläche sicherzustellen.

2. Antriebssystem nach Anspruch 1, **dadurch gekennzeichnet, dass** das drehende Glied (1) und die Übertragungsschale mit geometrischen Verzahnungsmitteln (5) von analoger Geometrie ausgerüstet sind, wobei das Ineinandergreifen der Mittel durch relativen Winkelversatz ausgeführt wird.

3. Antriebssystem nach einem der Ansprüche 1 oder 2, **dadurch gekennzeichnet, dass** die Übertragungsschale und das drehende Glied (1) eine jeweils vordere und hintere stirnseitige Auflagefläche (4) aufweisen, an denen die geometrischen Mittel (5) gebildet sind.

4. Antriebssystem nach Anspruch 3, **dadurch gekennzeichnet, dass** die stirnseitigen Auflageflächen (4) jede eine ringförmige Geometrie aufweisen, wobei die geometrischen Mittel (5) winkelmäßig konzentrisch auf den ringförmigen Geometrien verteilt sind.

5. Antriebssystem nach einem der Ansprüche 3 oder 4, **dadurch gekennzeichnet, dass** sich die geometrischen Mittel (5) in Bezug auf die Drehachse (A) des drehenden Glieds (1) und der Übertragungsschale radial erstrecken.

6. Antriebssystem nach einem der Ansprüche 2 bis 5, **dadurch gekennzeichnet, dass** die geometrischen Mittel (5) jedes eine winkelmäßige Abfolge von männlichen (5a) und weiblichen Mustern (5b) aufweisen, wobei die männlichen Muster (5a) dafür eingerichtet sind, auf einem axialen Weg, der dafür eingerichtet ist, zwischen den männlichen und weiblichen Mustern eine umfangsmäßige Interferenz sicherzustellen, die für die Übertragung des Motordrehmoments ausreichend ist, axial in die weiblichen Muster (5b) einzugreifen.

7. Antriebssystem nach Anspruch 6, **dadurch gekennzeichnet, dass** die Beschichtung (6) eine Dichtungswulst (8) aufweist, die sich quer in jedem der weiblichen Muster (5b) erstreckt, wobei die männlichen Muster (5a) dafür eingerichtet sind, am axialen Wegbeginn an der Wulst in Berührung zu gehen, um auf dem axialen Weg die Wulst an der Grenzfläche der männlichen (5a) und weiblichen Muster (5b) zu verformen und die Dichtigkeit im Bereich der Grenzfläche sicherzustellen.

8. Antriebssystem nach Anspruch 7, **dadurch gekennzeichnet, dass** die Dichtungswulst (8) eine Höhe aufweist, die größer oder gleich der Tiefe der weiblichen Muster (5b) ist.

9. Antriebssystem nach einem der Ansprüche 7 oder 8, **dadurch gekennzeichnet, dass** sich die Dichtungswulst (8) umfangsmäßig auf der Beschichtung (6) erstreckt.

10. Antriebssystem nach einem der Ansprüche 7 bis 9, **dadurch gekennzeichnet, dass** sich die Beschichtung (6) an eine Wand jedes der weiblichen Muster (5b) anschmiegt, in deren Inneren sich die Dichtungswulst (8) erstreckt.

11. Antriebssystem nach einem der Ansprüche 1 bis 10, **dadurch gekennzeichnet, dass** die Beschichtung (6) durch Abscheiden eines Produkts auf geometrischen Mitteln (5) von mindestens einem aus dem drehenden Glied (1) und der Übertragungsschale gebildet wird.

12. Antriebssystem nach Anspruch 11, **dadurch gekennzeichnet, dass** die Beschichtung (6) durch Eintauchen der geometrischen Mittel (5) in ein Bad des Produkts gebildet wird.

13. Antriebssystem nach Anspruch 12 in Abhängigkeit von Anspruch 7, **dadurch gekennzeichnet, dass** die Dichtungswulst (8) durch Halten der geometrischen Mittel (5) nach dem Eintauchen nach unten gedreht durch Schwerkraft gebildet wird.

14. Antriebssystem nach einem der Ansprüche 11 bis 13, **dadurch gekennzeichnet, dass** das Produkt eine Viskosität im Bereich zwischen 6000 mPa und 10000 mPa aufweist.

15. Wälzlager für ein Antriebssystem nach einem der Ansprüche 1 bis 14, wobei die Beschichtung (6) auf den geometrischen Mitteln (5) angeordnet ist, die fest mit dem drehenden Glied (1) verbunden sind.

16. Beschichtung (6) für ein Antriebssystem nach einem der Ansprüche 1 bis 10, wobei die Beschichtung dafür eingerichtet ist, zwischen den geometrischen Mitteln eingefügt zu werden, um sich auf dem axialen Eingriffsweg an der Grenzfläche der geometrischen Mittel zu verkrusten, um die Dichtigkeit im Bereich der Grenzfläche sicherzustellen.

17. Beschichtung (6) nach Anspruch 16, **dadurch gekennzeichnet, dass** sie eine Platte (7) aufweist, von der mindestens eine Seite (7a, 7b) eine Geometrie aufweist, die zu derjenigen der geometrischen Mittel (5) der Verzahnungsstruktur, denen zugewandt die Seite angeordnet werden soll, komplementär ist.

## Claims

1. Rotary drive system of a motor vehicle wheel, said system comprising a rolling bearing having a rotating member (1) mounted in rotation with respect to a member fixed by way of at least one row of rolling bodies, said rotating member comprising means for associating the wheel and said system comprising a bowl for transmitting an engine torque to said rotating member, said system further comprising a gear structure which has geometric means (5) secured respectively to the rotating member (1) and to the transmission bowl, said geometric means being arranged to be interlocked over an axial path to ensure the transmission of said engine torque, said system being **characterised in that** it comprises a coating (6) which is inserted between the geometric means (5) respectively of the rotating member and of the transmission bowl, said coating being arranged to, over the axial interlocking path, be embed itself at the interface between the geometric means of the rotating member and of the transmission bowl in order to ensure sealing at the level of said interface.

2. Drive system according to claim 1, **characterised in that** the rotating member (1) and the transmission bowl are equipped with geometric gear means (5) of similar geometry, the interlocking of said means being achieved by relative angular offsetting.

3. Drive system according to one of claims 1 or 2, **characterised in that** the transmission bowl and the rotating member (1) have a respectively front and rear frontal range (4) on which the geometric means (5) are formed.

4. Drive system according to claim 3, **characterised in that** the frontal ranges (4) each have an annular geometry, the geometric means (5) being distributed angularly concentrically on said annular geometries.

5. Drive system according to one of claims 3 or 4, **characterised in that** the geometric means (5) extend radially with respect to the axis (A) of rotation of the rotating member (1) and of the transmission bowl.

6. Drive system according to any one of claims 2 to 5, **characterised in that** the geometric means (5) each have an angular alternance of male (5a) and female (5b) patterns, the male patterns (5a) being arranged to be axially interlocked in the female patterns (5b) over an axial path arranged to ensure between said male and female patterns, a circumferential interference which is sufficient for the transmission of the engine torque.

7. Drive system according to claim 6, **characterised in that** the coating (6) has a sealing protrusion (8) which transversally extends in each of the female patterns (5b), the male patterns (5a) being arranged to come into contact on said protrusion at the start of the axial path in order to deform said protrusion at the interface of the male (5a) and female (5b) patterns over said axial path and ensure sealing at the level of said interface.

8. Drive system according to claim 7, **characterised in that** the sealing protrusion (8) has a height which is greater than or equal to the depth of the female patterns (5b) .

9. Drive system according to one of claims 7 or 8, **characterised in that** the sealing protrusion (8) extends circumferentially over the coating (6).

10. Drive system according to any one of claims 7 to 9, **characterised in that** the coating (6) moulds a wall of each of the female patterns (5b) inside which extends the sealing protrusion (8).

11. Drive system according to any one of claims 1 to 10, **characterised in that** the coating (6) is formed by deposition of a product on the geometric means (5) of at least one from among the rotating member (1) and the transmission bowl.

12. Drive system according to claim 11, **characterised in that** the coating (6) is formed by soaking the geometric means (5) in a bath of the product.

13. Drive system according to claim 12, when it depends on claim 7, **characterised in that** the sealing protrusion (8) is formed by gravity by maintaining the geometric means (5) rotated towards the bottom after soaking.

14. Drive system according to any one of claims 11 to 13, **characterised in that** the product has a viscosity of between 6000mPa and 10000mPa.

15. Rolling bearing for a drive system according to any one of claims 1 to 14, wherein the coating (6) is arranged on the geometric means (5) secured to the rotating member (1).

16. Coating (6) for a drive system according to any one of claims 1 to 10, said coating being arranged to be inserted between the geometric means to, over the axial interlocking path, embed itself at the interface of said geometric means in order to ensure sealing at the level of said interface.

17. Coating (6) according to claim 16, **characterised in that** it has a plate (7) of which at least one face (7a, 7b) has a geometry, complementary to that of the geometric means (5) of the gear structure facing which said face is intended to be arranged.
